# EUROPEAN PATENT SPECIFICATION

(11) **EP 1 232 611 B1**
(45) Date of publication and mention of the grant of the patent: **20.09.2006**
(21) Application number: 00975540.6
(22) Date of filing: 01.11.2000
(51) Int. Cl.: H04L 12/56, H04M 11/00, H04M 7/00, H04J 3/24, H04B 7/26, H04Q 7/38

(54) **METHOD AND APPARATUS FOR NETWORK CONTROLLED HANDOVERS IN A PACKET SWITCHED TELECOMUNICATIONS NETWORK**
VERFAHREN UND VORRICHTUNG FÜR NETZGESTEUERTES WEITERREICHEN IN EINEM PAKETVERMITTELTEN TELEKOMMUNIKATIONSNETZWERK
PROCEDE ET APPAREIL PERMETTANT UN TRANSFERT COMMANDE PAR RESEAU DANS UN RESEAU DE TELECOMMUNICATIONS A COMMUTATION PAR PAQUETS

(30) Priority: 12.11.1999 US 439625
(43) Date of publication of application: 21.08.2002
(73) Proprietor: MOTOROLA, INC., Schaumburg, IL 60196 (US)
(72) Inventor: GUPTA, Sanjay, Chicago, IL 60626 (US); SPEAR, Stephen, Skokie, IL 60203 (US); SUSAI, Antony, St. Charles, IL 60175 (US)
(74) Representative: Openshaw, Paul Malcolm
(86) International application number: PCT/US2000/030181
(87) International publication number: WO 2001/035586

(56) References cited:
- EP-A- 0 898 438
- WO-A-99/05828
- GB-A- 2 332 340
- US-A- 4 475 192
- US-A- 5 278 892
- US-A- 5 384 826
- US-A- 5 471 670
- US-A- 5 754 955
- US-A- 5 781 547
- US-A- 6 031 832

## Description

### Field Of The Invention

The invention relates generally to methods and systems for facilitating handovers of mobile units across coverage areas and more particularly to methods and systems for facilitating network controlled handovers in packet switched cellular networks.

### Background Of The Invention

Telecommunication systems, such as radiotelephone communication systems, require a mobile unit, such as a laptop computer, handheld communication device or other mobile device, to be handed off from one coverage area to another coverage area as the mobile unit moves from one coverage area to another or as congestion occurs. A handover, as known in the art, is a jointly agreed upon transfer of radio resources assigned to a Mobile and its control from one coverage area to another coverage area. Some digital wireless systems use mobile unit assisted handovers wherein the mobile unit controls whether a handover to another frequency or code is made. Further, for cell reselection by the mobile, these decisions of which cell to select are typically transparent to the radio resource network. Other conventional handover operations may employ network based handover control wherein a base station system, for example, determines the appropriate target cell and controls the handover of the mobile unit. Such systems are known, for example, with circuit switching digital cellular communication systems, such as the GSM system.

With the increased demand for communication of real time data, such as real time video, and other data, modified circuit switched digital cellular communication systems have been proposed. For example, the general packet radio service (GPRS) network described generally in the European Standard GSM03.60 V6.2.0, available from European Telecommunications Standard Institute, F-06921 Sophia Antipolis Cedex, France, describes a packet switched digital cellular telecommunication system that is employed with a circuit switched digital cellular communication system to provide packet switching and circuit switching of data (voice, video, etc.). The packet data switching networks use radio resource allocation that is shared among mobile units. In contrast, circuit switching telecommunication systems (e.g., TDMA based systems) typically allocate discrete parts of the bandwidth that are assigned to specific mobile units. For example, a specific TDMA time slot may be dedicated for a particular mobile unit. The GPRS network serves as an intermediary between the destination of the information and the mobile unit. However, such packet switched cellular networks typically do not provide mobility management functions that are sufficient to support relatively seamless handovers of real time connection oriented communications.

Also, for example, in the GPRS system, there are no direct physical links between base station systems. In addition, the packet data switching network nodes are typically unable to route information between base station systems since the SGSN is only aware of the BSSs that are served by it, and is not aware of other BSSs. It would be desirable to make modifications to the GPRS system and similar type systems to facilitate network controlled handovers instead of mobile unit controlled handovers.

Single mobile units may require a multitude of radio resources. For example, if the mobile unit is a lap top computer, radio resources in a packet domain may be shared for a number of software applications, including for example, a multimedia application, modem communication application running on the computer, and other radiotelephone resource demand applications. The GPRS network uses a packet mode technique to transfer high speed and low speed data and signaling. It attempts to optimize the use of network and radio resources. A strict separation between the radio subsystem and network subsystem is maintained in the attempt to allow the network subsystem to be reused with other radio access technologies.

However, such packets switched cellular networks typically do not provide support for network controlled handovers. For example, in GPRS network based systems, it is the mobile unit's responsibility to perform cell selection and routing, and location area updates to the network. A problem can arise when the mobile unit moves from one cell to another, since the flow of packets to the mobile unit can be disrupted until a successful cell update procedure has been completed. This also increases the time taken to successfully complete the handover. Also, if a mobile unit requires additional shared resources, namely shared time slots or shared codes, and the mobile unit requires an additional resource, for example, if a new software application requires an additional wireless link, the mobile system may not have the requisite information to determine whether the target cell has the appropriate resource requirements for the appropriate period of time. With real time services in the packet domain, multimedia information such as streaming video can be undesirably interrupted during mobile unit controlled handovers. In addition, the base station system cannot hand over mobile units due to determined congestion.

The proposed enhancements to the GPRS system, also utilizes a quality of service table on a per cell basis wherein packet data protocol (PDP) contexts are maintained by a packet switching network element and not by the base station system. The packet switching network element is an SGSN. These PDP contexts may include, for example, on a per session basis, for a given mobile unit, source traffic descriptor data indicating, for example, the bit rates for a particular session, and other performance descriptors such as the acceptable delay for the given session. Multiple sessions are defined for a given mobile. For example, a mobile unit may require a voice session, an Internet web browsing session, and other sessions simultaneously. The resource requirement information for a given mobile is maintained by the packet data switching network. However, maintaining this information on a per cell basis by the SGSN limits the ability of the base station system to perform functions related to traffic management. Therefore, the Serving GPRS Support Node (SGSN) has to be informed each time a cell in which any given mobile is located. This can severely restrict the ability of the base station system to perform functions related to traffic management. Currently, handover of mobiles by the BSS cannot be performed independently of the packet switching network element.

Moreover, the packet data switching network typically takes a request for packet servicing and routes the packets to the appropriate base site controller. The packet sent from the SGSN to a BSS includes addressing information containing among other things, a mobile identifier (MID) and a cell identifier (CELLID). So the SGSN has to direct mobiles to cells during handover but it does not have the requisite handover information. The base site controller passes the information to the specific cell indicated by the address information from the SGSN. The SGSN schedules packets on a per cell basis and addresses packets to cells (in addition to mobiles) so that a base station system simply needs to know to perform the protocol translation and timing of when to send the information. However, it would be desirable if packet routing could be performed by the BSS to reduce overhead of the SGSN. Also, there is a need for the BSS to perform traffic management based on radio related information because the current GPRS system does not provide for directing mobiles into less congested cells.

One known technique for network-based handovers are used in digital cellular circuit based switching systems such as the GSM system. However, such systems are not typically adapted to accommodate packet switching information to facilitate handovers. Current network assisted handoffs typically only handover based on signal strength indication and radio resource quality. Known network assisted handovers typically do not take into account the quality of service on a per mobile basis that has been indicated. With packet switching systems, it would be desirable to have a network controlled handover that takes into consideration the needs of multiple users of shared radio resources. It would be desirable if such a system would, for example, have the ability to move one mobile to another coverage area to allow another mobile to improve the quality of its service if, for example, a new mobile required an additional radio resource. In addition, known digital cellular communication systems employing packet data switching do not allow the renegotiation during handover of quality of services changes during the call.
Consequently, a mobile unit is not allowed to add resources or reduce resources during the handover.

EP 0898438 discloses a method and system for controlling radio communications network and radio network controller. In conjunction with a connection set up an anchor radio network controller is selected via which user information flows for the whole duration of the connection. If the connection is handed over to a base station that belongs to another radio network controller, the user information is directed to travel to the active radio network controller via the anchor controller.

GB 2 332 340 discloses a method for facilitating handover in which a mobile station transmits radio link measurement reports to a service node in encapsulated form to enable the service node to make handover decisions instead of or in addition to the normal handover decisions made at the BSC.

US 5278892 discloses a CDMA packet-switched communications network in which soft handoffs may occur without change in the call processing unit that is handling the call, so that a single call processing unit handles the call.

According to a first aspect of the invention, there is provided a wireless network handover control apparatus as claimed in claim 1.

According to a second aspect of the invention, there is provided a digital wireless system having a packet switching data network element in operative communication with at least a first and second base station system as claimed in claim 10.

According to a third aspect of the invention, there is provided a wireless network handover control method as claimed in claim 19.

Accordingly, a need exists for an apparatus and method that facilitates network controlled handovers in a packet switched digital wireless system.

### Brief Description Of The Drawings

FIG. 1 illustrates a block diagram of one example of a system that employs network controlled handovers in a packet switched digital telecommunication system in accordance with one embodiment of the invention. [MSC stands for Mobile Switching center, we should use another term for what is labeled as MSC in the figure]
FIG. 2 is a flow chart illustrating one example of messaging in the system shown in FIG. 1 in accordance with one embodiment of the invention.
FIG. 3 is a block diagram illustrating one example of a base station system with shared resource handover control in accordance with one embodiment of the invention.
FIG. 4 is a flow chart illustrating the operation of one example of the apparatus of FIG. 3.
FIG. 5 is a flow chart illustrating session set up in accordance with one embodiment of the invention.
FIG. 6 is a flow chart illustrating a method of network controlled handover in a packet switched telecommunication system based on a congestion determination in accordance with one embodiment of the invention.
FIG. 7 is a flow chart illustrating one example of a method of a network controlled handover in a packet switched telecommunication system based on the determination of what new shared resources are needed by a mobile unit in accordance with one embodiment of the invention.

### Detailed Description Of The Preferred Embodiment

Generally, a method and apparatus for facilitating network controlled handover in a wireless network that employs packet switching and use of shared resources, such as timeslots, and provides network element, such as base station system, controlled handover of a mobile unit by providing packet routing for a plurality of mobile units to facilitate handover of at least one mobile unit. The base station system employs a memory element, such as a database or other suitable memory, that contains stored radio resource requirement data, such as PDP context information, on a per mobile unit basis. By having the packet routing, storage and maintenance of shared radio resource requirement data stored at the base station system level in a network, network controlled handovers can occur without the control of the packet switched network element that provides packets to the base station system.

In one embodiment, a wireless network handover control apparatus, such as that employed in a base station system or other suitable network element, includes a shared radio resource controller that is operative to track available shared resources, such as frequencies, time slots, codes or other radio resources shared among mobile units, and also includes a packet handover controller. The packet handover controller is in operative communication with the shared radio resource controller and provides packet routing of data packets received from the packet switching network. The packet routing is modified so that the packet switching network routes a mobile for a base station system, and the shared radio resource controller, such as a BSS, receives the evaluates the identifier for a context for a mobile contained in the packet (e.g., context ID) and routes the packet to the appropriate cell based on a context ID/cell look up table or other mechanism. This is performed on a per mobile basis The packets are routed to the BSS that is serving the mobile. The addressing mechanism can be based on a network address such as an IP address mapped to a context or flow identifier, or an identifier derived from an IP address or other suitable information. In addition, the disclosed method and apparatus includes facilitating the resource allocation, release, creation and deletion of packet data contexts at a target base station system, or other network element, and a source base station system, or other network element. The system and method also handles the target and source network elements to perform handovers for purposes of traffic management independently of the packet switching network.

In another embodiment, a packet switching data network element, such as an SGSN or other suitable element, stores data representing base station system identification data for base station systems that are being served by the packet switching data network element. In addition, data representing other packet switching data network elements for other base station systems that are adjacent to those base station systems being served by packet switching data network elements are also stored. A packet switching data network element then routes messages to a suitable base station system or other packet switching data network element based on the stored base station system identification data and the stored packet switching data network element identification data.

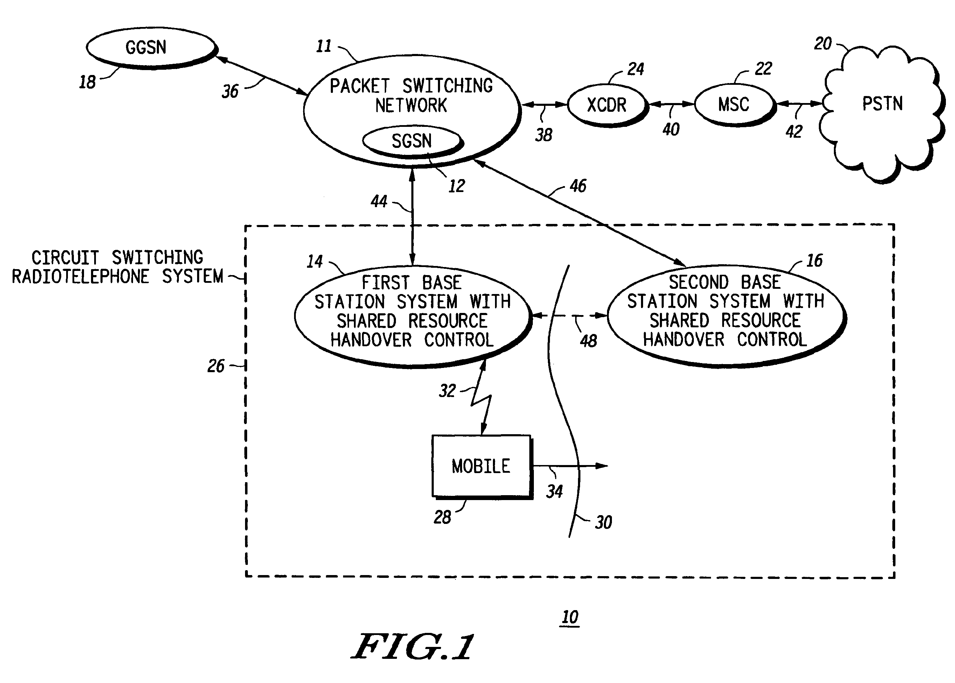

FIG. 1 illustrates one example of a digital wireless system 10 having a packet switching network 11 having one or more packet switching network elements 12 in operative communication with a radio resource network control element such as a first base station system 14 with shared resource handover control, and a second base station system 16 with shared resource handover control. For purposes of illustration only, the invention will be described with reference to a GPRS system. However, it will be recognized that the invention will be applicable to any suitable wireless communication system having packet switching. The packet switching network element 12 may be operatively linked to a gateway GPRS (GGSN) support node 18 if desired. The packet switching network element 12 may also be coupled to a public switching telephone network 20 through a mobile switching center 22 and transcoder 24 that translates speech coded in a format that is suitable for transmission over the radio (for example Full rate, Half rate, Adaptive Multirate) to speech that is suitable for transmission over a public switch telephone network (PSTN) (for example A-law PCM),as known in the art. The packet switching network element 12 may be, for example, an SGSN or any other suitable packet switching network element.

The base station systems 14 and 16 are, in this embodiment, part of a radiotelephone system generally indicated at 26. Generally, a handover of a mobile unit 28 from the first base station system 14 to the second base station system 16 occurs when the mobile unit 28 crosses or becomes close enough to a coverage boundary 30. The mobile unit 28 may be any suitable communication unit, software application, or other entity that communicates with a base station system via a wireless link 32. The arrow 34 indicates the direction of movement of the mobile unit 28 across a seam in a coverage area, for example, from one cell to another cell.

As known in the art, the gateway support node 18 (GGSN) may be suitably linked to the SGSN 12 through a link 36. Similarly, the packet switching network 11 is coupled to the transcoder 24 through link 38 and the transcoder 24 is coupled to the MSC 22 through link 40 and the MSC 22 is coupled to the PSTN 20 through link 42.

The packet switching network element 12 is operatively coupled to the first base station system 14 through link 44 where packetized data, such as realtime, audio, video, voice, data, or other information is communicated on a packetized basis. The second base station system 16 with shared resource handover control, is also linked to the packet switching network element 12 through link 46. If desired, a direct communication link 48 may also be used between the first base station system 14 and the second base station system 16.

The first base station system 14 with shared resource handover control, receives packet switched data from the packet switching network element 12 over the link 44. The first base station system 14 provides base station system control handover of mobile unit 28, by providing packet routing for one or more mobile units to facilitate handover of the mobile unit from one cell to another. Accordingly, packet routing is performed by the base station system as opposed to the packet switching network. The BSS determines the cell of the mobile to which any given packet is destined to and then directs it for transmission in the appropriate cell. The BSS maintains a database of mobiles on shared channels and maintains a table of which mobiles (on a per context ID basis) are in which cells and routes the packet, based on the context ID in the packet, to the appropriate cell. Therefore, the SGSN need not accumulate or send the cell ID, but need only route the correct packet to the correct BSS, such as through a look up table identifying a context ID of a given mobile and the associated BSS for that context ID as determined through standard mobility requirement procedures. The first base station system 14 and the second base station system 16 has substantially identical components. Therefore, future descriptions will be made with respect to the first base station system 14; however, they are equally applicable to the second base station system 16.

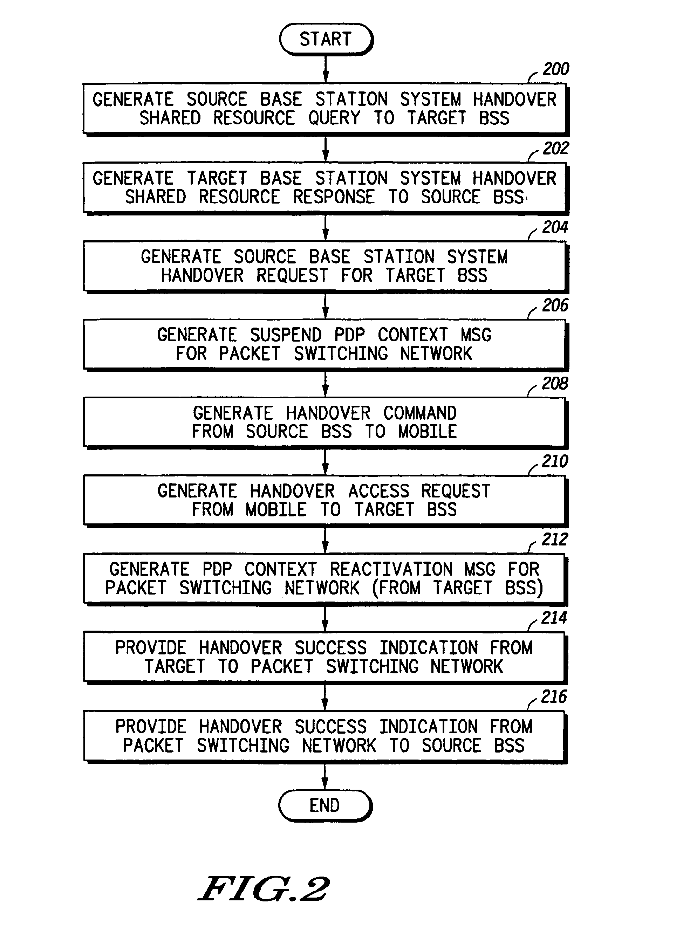

Referring to FIG. 2, a method for providing wireless network handover control for the system of FIG. 1, includes generating source base station system handover shared resource query to a target base station system, as shown in block 200. For purposes of illustration, and not by way of limitation, the first base station system 14 will be considered the source base station and the second base station system 16 will be considered the target base station. The establishment of a signaling link between the source and potential target base station systems can be performed by using a physical link such as direct communication link 48 between the source BSS and target BSS, or a logical link that traverses through one or more network elements such as a BSS, SGSN and GGSN. In this embodiment, the packet switching network element 12 will be considered as having a single packet switching network element, such as an SGSN. In this embodiment, the packet switching network element 12 stores a table, that includes, for example, data representing base station systems, along with base station system identification data for those base stations that are either being served by the SGSN (e.g., BSS 14 and 16), or for base station systems that are adjacent to one or more base station systems that are being served by the SGSN. As such, the packet switching network element 12 stores data representing base station system identities for base station systems that are being served by the packet switching data network element and/or stores data representing other packet switching data network element identification data such as for base station systems that are adjacent to those base station systems that are served by the packet switching network element 12. The packet switching network element 12, upon receiving a packet with a base station system identifier as the destination station from a source BSS over the link 44, forwards the packet to the destination BSS if it is a BSS in the table indicating that it is serving the destination BSS. Otherwise, the packet switching network element 12 forwards the packet to another appropriate packet switching data network element serving the destination BSS identified by the BSS identifier in the packet. The table stored by the packet switching network element 12 may be, for example, in the form of a routing table that is used to determine if the destination base station system is being served by the packet switching data network element and if it is not, the packet data protocol address (for instance, an Internet protocol address) of the packet switching network element serving the destination base station system. Alternatively, the direct communication link 48 may be used as a mechanism for direct base station system to base station system signaling for purposes of handover.

Each base station system 14 and 16 with shared resource handover control, stores shared radio resource requirement data on a per mobile basis. For example, packet data protocol (PDP) contexts, as defined, for example, in GPRS Specification No. 03.60 v 6.2.0, are stored in a database or other suitable memory accessible by the base station systems 14 and 16 on a per mobile basis. Examples of PDP contexts for mobiles may be found for example in the GPRS Specification No. 03.60 v 6.2.0, page 81. The contexts are dynamically updated by the BSS as radio resource requirements change. The shared radio resource requirement data may also be stored, for example, on a per group of mobile units basis if, for example, mobile units were grouped into a suitable groups. Although the base station systems 14 and 16 may include a database for storing the radio resource requirement data on a per mobile unit basis, it will be recognized that a database may be located in any suitable location for access by a suitable base station system. The handover shared resource query may be, for example, a handover resource query message to another network handover control apparatus such as from the first base station system 14 to the second base station system 16. This query may be in the form of suitable CDMA based handover control packets. The handover shared resource query may include data, representing for example, whether a target base station system has the requisite available codes, time slots or other resources to accommodate a mobile unit that is going to be handed off from one cell to another. The handover shared resource query may take many forms, including, for example, a simple query wherein the query is generated to contain data that will be responded to by the target base station system indicating the ability to support the requested handover. Alternatively, an implicit resource allocation query may be used which results in the actual allocation of the resources which may be all or predetermined subsets of the active PDP context, to support the requested handover. In the case of a simple query, the source BSS determines the ideal target cell out of the list of target cells that are queried and initiates the handover procedure.

As shown in block 202, the target base station system, such as the second base station system 16, generates a handover shared resource response to the query, back to the source BSS indicating, for example, whether it has suitable shared resources available by evaluating shared resource availability table. For example, the target base station system may indicate whether shared resources such as codes and time slots for various packets will be available for the mobile unit intended to be handed over. As shown in block 204, after the handover shared resource response is passed to the source base station system 14, the process includes generating, by, for example, the source base station system 14, a packet data protocol context suspend message for the packet switching network element 12. In order to perform a handover for any given mobile unit, the base station system should be aware of all of the active packet data protocol contexts of a mobile unit before it can initiate the handover process. The stored shared radio resource requirement data, also referred to the PDP context information, may be obtained from any suitable source, including the packet switching network element 12, the mobile unit, or any other suitable source. In the event that not all PDP contexts can be handed over successfully, the source BSS may repeat the query process with a new set of potential targets, delay the handover attempt or suspend or terminate one or more PDP contexts and proceed with the handover. After the source BSS receives responses from a plurality of target BSSs, the source BSS can determine the ideal target cell to which the mobile unit can be handed over. The ideal target cell may be based on, for example, conventional best cell algorithms, and may additionally include whether all PDP contexts can be supported by the target BSS. Once the ideal target BSS has been identified by the source BSS, the source BSS notifies the ideal target BSS and informs the target BSS to reserve the required resources in anticipation of the handover.

As shown in block 206, the source BSS generates a packet data protocol context suspend message which is sent to the packet switching network element 12 to indicate that all PDP contexts associated with the mobile unit should be placed in a suspend state. The packet switching network element 12 buffers any downlink packets for a suspended PDP context until the PDP context is activated or with a predetermined time expires. As shown in block 208, the source BSS then generates a handover command to the mobile unit to command the mobile unit to go to a specific target cell. As shown in block 210, the mobile unit then generates a handover access request and communicates the request to the target BSS as shown in block 210. As shown in block 212, upon detecting a handover from the mobile unit, the target BSS generates a packet data protocol context reactivation message to the packet switching network element 12 to request the packet switching network element 12 to modify and re-activate the PDP context associated with the mobile unit under consideration. The modifications requested can include one or more of the following modifications, modification of the cell, the quality of service for one or more PDP contexts, deletion of a PDP context that cannot be supported after the handover is completed, or any other suitable request of modifications. For example, the handover may be applicable only to a subset of the PDP contexts, resulting in the deletion of the remaining active PDP contexts. Also upon detecting a handover from the mobile unit, the target BSS also informs the source BSS of the successful completion of the handover by providing a handover success indication message. Alternatively, the packet switching network element 12 may indicate to the source BSS after it has modified and activated the PSP context that the successful completion of the handover has occurred. Providing of the handover success indication from the target BSS to the packet switching network element 12 and providing the handover success indication from the packet switching network element 12 to the source BSS is shown in blocks 214 and 216. After the successful handover, the source BSS then releases all resources that have been allocated to the mobile unit. The resources allocated to the mobile unit are released by the source BSS typically only after receiving a notification of a successful handover from the target BSS. This allows the mobile unit to return to the source in case of an unsuccessful handover attempt. Also, it will be recognized that if inter packet switching data element communications are used, the source SGSN then may act as an anchor for all or some of the PDP context.

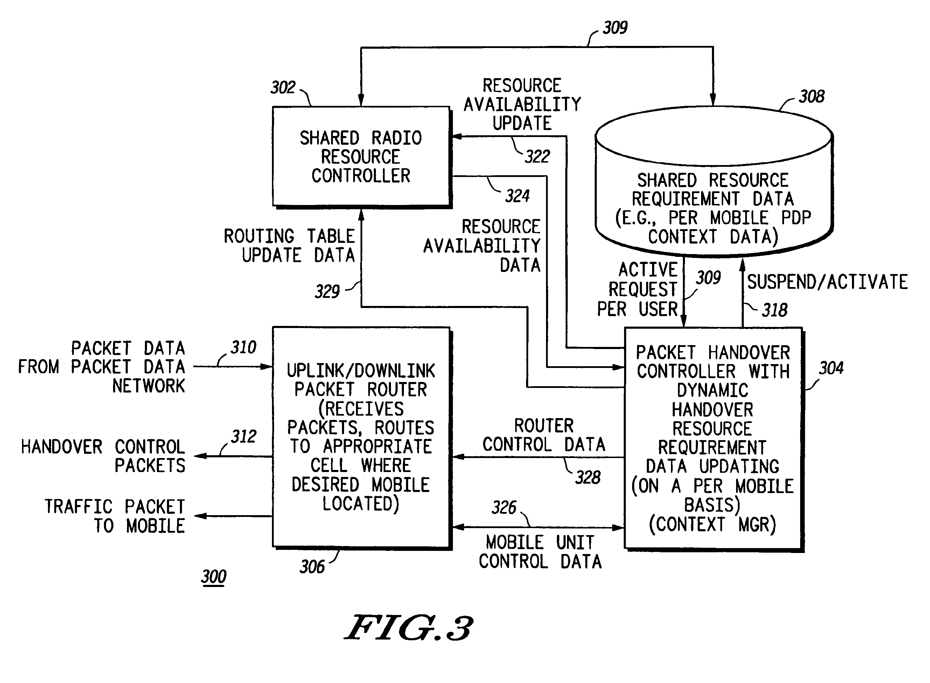

Referring to FIG. 3, one example of a network handover control apparatus 300 includes a shared radio resource controller 302, a packet handover controller 304 with dynamic handover radio resource requirement data updating capabilities, an uplink/downlink packet router 306 and memory 308 containing stored shared radio resource requirement data 309 on a per serving mobile basis. The network handover control apparatus 300 may be incorporated, for example, in the first base station system 14 and the second base station system 16. The network handover control apparatus 300 receives packet data 310 from the packet switching data network element over link 44. The packet data 310 includes a context ID for each mobile. The network handover control apparatus 300 provides handover control packets 312 that contain a cell ID to which the mobile is to be handed over, the frequency, code, timeslot or any other suitable data to allow access by the mobile. In addition, conventional traffic packets may also be output from the network handover control apparatus 300. The network handover control apparatus 300 may be implemented using a suitably programmed computer or computers, processing systems, or any suitable combination of hardware, software, or firmware. The shared radio resource controller 302 is operative to track available shared radio resources for each mobile unit being serviced by a base station system. The shared radio resource controller 302 may be, for example, a software program or combination of hardware, software and/or firmware, which maintains, for example, a table of available shared resources, such as time slots, frequencies, codes, or any other suitable radio resources that are shared on a packet basis by a plurality of mobile units.

The packet handover controller 304 provides packet routing of received data packets for mobile units that it services, to facilitate handover of mobile units. With the packet handover controller 304 providing packet routing, the packet routing is moved from the packet switching network element 12. One advantage of this arrangement is that the BSS can perform handovers without informing the SGSN. With regards to packet routing, the packet handover controller 304 knows which cell (if any) a given mobile belongs to and therefore which packets must be routed to which cell (the id of the mobile is located in the header of each packet).

In addition, the packet handover controller 304 dynamically updates the shared radio resource requirement data 309 stored in memory 308 for each mobile as the resource requirement of a mobile changes during the course of its activation. The radio resource requirement data may include for example the number of codes required by a mobile, the quality of service requirements for a mobile or any other suitable radio resource requirement data. To determine whether to update the radio resource requirement data, the packet handover controller 304 determines whether changes are required due to a change in traffic or changes in available resources (e.g., increased or decreased radio resources), or by the mobile sending a message to the SGSN to update one or more PDP context's for that mobile. As such, the network based packet handover controller 304 serves as a type of PDP context manager. The packet handover controller 304 may be implemented as a software program executed by a suitable processing unit. The packet handover controller 304 generates suspend and/or activate command data 318 that affects the activation or suspension of the radio resource requirement data 309 for a given mobile unit based on resource requirements of the mobile unit and the available shared resources of a BSS. For example, a field associated with a given PDP context for a given mobile contains information indicating whether the PDP context has been suspended due to limited resource availability. The packet handover controller 304 obtains the radio resource requirement data 309 containing the suspend/activation information to dynamically update resources for mobiles. The packet handover controller 304 also generates resource availability update data 322 to the shared radio resource controller 302 so that the shared radio resource controller 302 can update the status of available resources once the packet handover controller 304 determines which shared resources are available in view of those being used by all mobile units being served. The shared radio resource controller 302 generates resource availability 324 for the packet handover controller 304 so that the packet handover controller 304 can make a decision as to whether the handover for negotiation for additional resources can be accommodated. The packet handover controller 304 also generates the mobile unit control data 326 and router control data 328.

The mobile unit control data 326 is passed to the packet router 306 where it is packetized for transmission to control handover of the mobile unit. The mobile unit control data 326 includes the handover control packets 312. As part of the mobile unit control data 326 for the packet handover controller 304, the mobile provides information regarding the surrounding cell, such as SSI, bit error rates and other suitable data used to determine whether a handover should occur.

The packet handover controller 304 generates the router control data 328 which may be, for example, packet data that has been suitably addressed by the packet handover controller 304 so that the packet data is routed to the appropriate cell where the desired mobile is located.

Although described with reference to an inter BSS type handovers, such as those between BSS's associated with different BSS's, it will be recognized that the disclosed apparatus and method may also be applied to intra BSS's handovers such as between two or more BTS's associated with a same BSS.

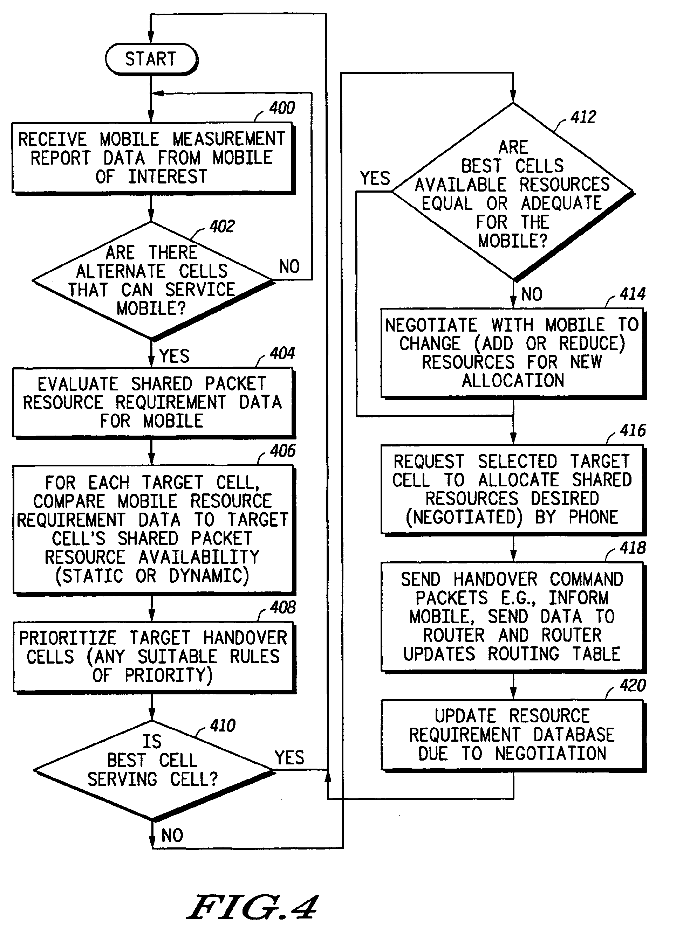

Referring to FIGs. 3 and 4, a flow chart (FIG. 4) of one example of the operation of the network handover control apparatus 300 is shown wherein the apparatus 300 receives mobile measurement report data in the form of packet data from the packet network to determine signal strength indication of neighboring cells. This is shown in block 400. As shown in block 402, the apparatus determines whether there are alternate cells that can service the mobile. As shown in block 404, the network handover control apparatus 300 evaluates shared radio resource requirement data 309 as stored in memory 308 for the given mobile. As shown in block 406, for each target cell the packet handover controller 304 compares the mobile radio resource requirement data to a target cell's shared packet resource availability data to determine whether the target cell can accommodate the necessary shared resource requirements of the mobile to be handed over. The network handover control apparatus 300 may compare the mobile radio resource requirement data to a target cell's shared packet resource availability data on a static or a dynamic basis. For example, on a static basis, the network handover control apparatus 300 only looks at currently allocated resources. The network handover control apparatus 300 also performs the comparison on a dynamic basis wherein traffic demands for given resources by other mobiles are taken into account to determine whether mobiles can be removed or added.

As shown in block 408, the packet handover controller 304 prioritizes target handover cells using any suitable rules of priority as known in the art. The process includes determining whether the serving cell is the best cell as shown in block 410. For example, if the serving cell has the highest C/I, if the serving cell requires the fewest contexts to be suspended, or any other suitable criteria for the mobile. The best cell may have a network perspective as well, which takes into account both the traffic and required or requested contexts of other users. The best cell may be from a system perspective and not only the individual mobile perspective. If it is, no handover will occur. However, if the serving cell is not the best cell, the process includes determining whether the available resources of the best cell are equal or adequate to the available resources of the current cell for the mobile as shown in block 412. If the available resources of the target cell are not the same as the available shared resources of the serving cell, the process includes, as shown in block 414, negotiating with the mobile unit to change (add or reduce) resources for new allocation. For example, if a mobile is moving and a target cell cannot accommodate all the software applications requiring digital wireless communication, the base station system will negotiate with the mobile unit to determine whether an application can cease operation for a period of time or in the alternative, if the target cell has additional resources that the mobile unit would like to use, the mobile unit is asked whether additional resources can be used. Hence, the system renegotiates allowable mobile resources with a target cell network element for a mobile unit designated for a handover after target cell selection by either suspending at least a portion of a PDP context associated with a mobile, de-activating at least a portion of a PDP context associated with a mobile, or re-activating at least a portion of a suspended PDP context associated with a mobile.

As shown in block 416, once the appropriate shared resources have been determined, the source base station system requests a selected target cell to allocate the shared resources desired by the mobile. As shown in block 418, the process includes sending handover command packets from the source to the mobile unit to inform the mobile unit. This is performed, for example, by sending the command data 318 to the router. The router then updates the routing table data controlled by shared radio resource controller 302. The routing table update data 329 serves as dynamic feedback to allow dynamic updating of radio resource requirement data for mobile units. For example, when the packet handover controller 304 determines that a radio resource will be used for a given PDP context, the routing table update data 329 informs the shared radio resource controller 302 of which radio resource is no longer (or now is) available. As shown in block 420, the process includes updating radio resource requirement data 309 in memory 308 based on the negotiation. This is performed by sending the resource availability update data 322 to the packet handover controller 304 which then updates the radio resource requirement data 309 based on the routing table update data 329.

Accordingly, the packet handover controller 304 determines a most suitable target cell for a mobile unit based on a stored radio resource requirement data. The packet handover controller 304 renegotiates allowable mobile unit resources with target cell network element, such as a base station system, for a mobile unit designated for a handover after target cell selection, based on a stored radio resource requirement data. As such, after an initial session has begun, renegotiation of resources can be facilitated by network controlled handover mechanism without the intervention of the packet switching data network element 12. The packet handover controller 304 reassigns radio resources to a mobile unit based on the stored radio resource requirement data 309 associated with another mobile unit, for example another mobile may require additional resources, a mobile unit being handed over may be denied shared resource in favor of a mobile unit using the shared resource, or alternatively, the packet handover controller 304 reassigns radio resources to allow a mobile unit being handed over to gain additional resources at the expense of another mobile unit that may be about to leave the target cell or that is on a lower priority or is based on the type of information being communicated, such as real time information versus nonreal time data. The reassignment of radio resources may be based on the resource requirement data of another mobile within the cell or based on the resource requirement of a mobile outside of the cell. The packet handover controller 304 may also reassign radio resources to a mobile unit based on cell congestion data.

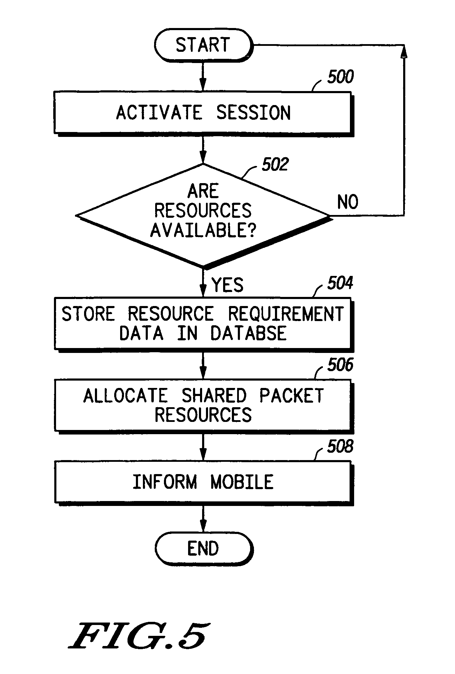

FIG. 5 illustrates one example of an active session between a source network element and a mobile unit in accordance with one embodiment of the invention. As shown, the network element, such as a base station system, activates the session with the mobile unit as known in the art and shown in block 500. As shown in block 502, the base station system determines whether resources are available for the mobile unit based on the radio resource requirement data 309 stored by the packet switching network or stored in the base station system for the given mobile. If the resources are available, the system stores the resource requirement data 309 in the database as shown in block 504. The base station system then allocates the shared packet resources as designated by the radio resource requirement data 309 as shown in block 506. The base station then informs the mobile that the requisite shared packet resources are allocated as shown in block 508 and the session then continues to allow the mobile to communicate information packets.

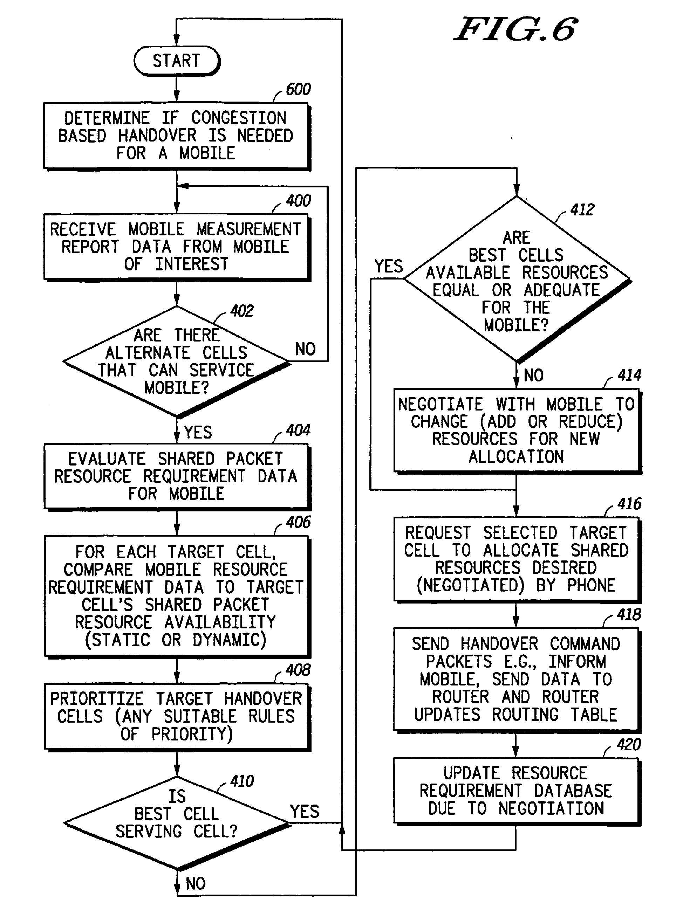

FIG. 6 illustrates a flow chart showing a handover based on detected congestion by a base station system, or other suitable network element. As shown in block 600, the process includes determining if congestion based handover is needed for a mobile. This is determined, for example, based on traffic density information accumulated by the BSS for each cell.

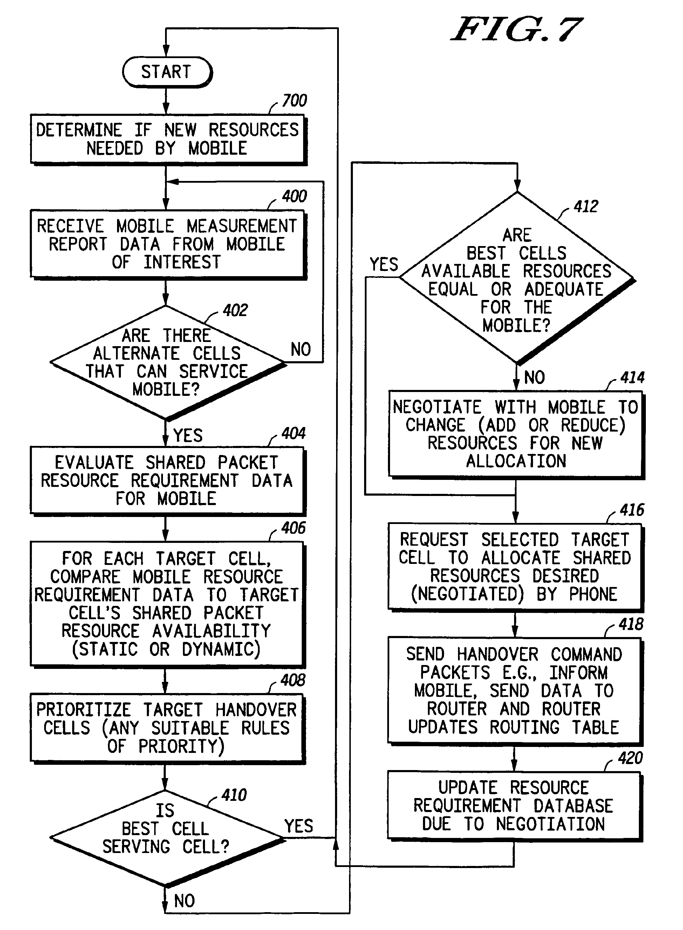

FIG. 7 illustrates a flow chart showing a handover in accordance with one embodiment of the invention based on determination if new resources are needed by a mobile unit. As shown in block 700, the process includes determining if new resources are needed by a mobile unit based on a request by a mobile unit for additional shared packet resources. For example, this may be done by if a new PDP context is activated for a mobile and the current cell in which a mobile is located does not have sufficient resources for this context and all the already active contexts.

As described, the packet handover controller 304 generates and receives data representing, for example, handover resource request message to another network handover control apparatus, handover resource response message, a handover request, a packet data protocol context suspend message, and a re-activate packet data protocol context message, which are preferably all packetized communications.

Although not shown in FIG. 3, where the network handover control apparatus 300 is also in another network element, such as an additional BSS, a second memory that is accessible by the second network element also contains dynamically updated radio resource requirement data 309 for a plurality of mobile units that are serviced by the network element such as a base station system. Accordingly, the additional base station system also includes a handover controller with a shared radio resource controller substantially identical to that described with reference to FIG. 3. Where multiple packet handover controllers are used, they renegotiate allowable mobile unit resources from a mobile unit designated for handover after target cell selection, based on dynamically updated radio resource requirement data 309 and one of the memories. Also, the base station systems 14 and 16 are part of a digital RF communication network element that utilizes both packet switching formats and circuit switching formats for communicating data with a plurality of mobile units.

Accordingly, a guaranteed quality of service for all or prenegotiated set of active PDP contexts or shared radio resource requirement data may be provided upon completion of the handover. Since the handover is network controlled independent of the packet switching network element, minimal disruption in packet transmission reception during the handover process may be facilitated. In addition, a handover may include a subset, or superset of PDP contexts. In addition, renegotiation of quality of service criteria may be provided during handover to allow flexibility in improving service handling in response to, for example, congestion data, shared resource availability, and other criteria. A faster handover can occur due to the minimal involvement of the packet switching network element. Other advantages will also be apparent to those of ordinary skill in the art.

It should be understood that the implementation of other variations and modifications of the invention in its various aspects will be apparent to those of ordinary skill in the art, and that the invention is not limited by the specific embodiments described. It is therefore contemplated to cover by the present invention, any and all modifications, variations, or equivalents that fall within the scope of the basic underlying principles disclosed and claimed herein.

## Claims

1. A wireless network handover control apparatus comprising:
a shared radio resource controller (302) operative to track available shared resources;
**characterized in that** the apparatus further comprises
a base station system (BSS) that includes a packet handover controller (304), in operative communication with the shared radio resource controller, adopted to provide packet routing of received data packets for a plurality of mobile units;
memory (308), operatively coupled to the packet handover controller, containing stored radio resource requirement data that includes PDP context information, and
wherein the packet handover controller is adopted to determine a suitable target cell for the at least one mobile unit based on the stored radio resource requirement data and the included PDP context information.

2. The network handover control apparatus of claim 1, wherein the memory contains the stored radio resource requirement data on a per mobile unit basis.

3. The network handover control apparatus of claim 1 wherein the packet handover controller is adopted to renegotiate allowable mobile unit resources with a target cell network element for a mobile unit designated for a handover after target cell selection, based on the stored radio resource requirement data.

4. The network handover control apparatus of claim 1 wherein the packet handover controller is adopted to reassign radio resources to at least one mobile unit based on the stored radio resource requirement data associated with another mobile unit.

5. The network handover control apparatus of claim 1 wherein the packet handover controller is operative to reassign radio resources to at least one mobile unit based on cell congestion data.

6. The network handover control apparatus of claim 1 wherein the packet handover controller generates and receives data representing at least one of: a handover resource query message to another network handover control apparatus, a handover resource response message, a handover request, a packet data protocol context suspend message, and a re-activate packet data protocol context message.

7. The network handover control apparatus of claim 1 wherein the shared radio resource controller and the packet handover controller are part of a digital RF communication network element adopted to utilize both packet switching formats and circuit switching formats for communicating data with the plurality of mobile units.

8. The network handover control apparatus of claim 1 including a packet router, operatively coupled to the packet handover controller, adopted to receive packets from a packet switching network element and provides handover control packets for a mobile unit.

9. The network handover control apparatus of claim 1 wherein the shared radio resource controller is adopted to update radio resource requirement data based on resource availability update data.

10. A digital wireless system having a packet switching data network element in operative communication with at least a first (14) and second (16) base station system (BSS) **characterized by**:
first memory, operatively accessible by the first base station system (14), containing dynamically updated radio resource requirement data for a plurality of mobile units serviced by the first BSS and wherein,
the first BSS includes a first shared radio resource controller, operative to track available shared resources, and a first packet handover controller, in operative communication with the shared radio resource controller, adopted to provide packet routing of received data packets for a plurality of mobile units;
second memory, operatively accessible by the second base station system (16), containing dynamically updated radio resource requirement data for a plurality of mobile units serviced by the second BSS arid wherein,
the second base station system includes a second shared radio resource controller, and a second packet handover controller, in operative communication with the second shared radio resource controller, adopted to provide packet routing of received data packets for a plurality of mobile units,
wherein the dynamically updated radio resource requirement data includes PDP context information and wherein the first and second packet handover controllers are adopted to determine a suitable target cell for a mobile unit based on the dynamically updated radio resource requirement data and the included PDP context information in one of the first and second memories.

11. The system of claim 10 wherein the first and second packet handover controllers are adopted to renegotiate allowable mobile unit resources with a target cell network element for a mobile unit designated for a handover after target cell selection, based on dynamically updated radio resource requirement data in one of the first and second memories.

12. The system of claim 10 wherein the first BSS is adopted to generate data representing a handover-shared resource query for the second BSS based on the dynamically updated radio resource requirement data stored in the first memory and wherein the second BSS is adopted to generate data representing a handover resource response for the first BSS, based on shared resource availability data of the second BSS and wherein the first BSS is adopted to generate data representing a packet data protocol context suspend message corresponding to a mobile unit to handed over to the second BSS, for the packet data switching network element, and wherein the second BSS is adopted to generate data representing packet data protocol context re-activation for the packet data switching network element in response to a successful handover from the first BSS.

13. The system of claim 10 wherein the first packet handover controller is adopted to reassign radio resources to at least one mobile unit based on the stored radio resource requirement data associated with another mobile.

14. The system of claim 10 wherein the first packet handover controller is operative to reassign radio resources to at least one mobile based on cell congestion data.

15. The system of claim 10 wherein the first and second base station systems are part of a digital RF communication system that utilizes both packet switching formats and circuit switching formats for communicating data with the plurality of mobile units.

16. The system of claim 10 wherein the first BSS includes a first packet router, operatively coupled to the first packet handover controller, adopted to receive packets from the packet switching data network element, and is adopted to provide handover control packets for a mobile unit.

17. The system of claim 16 wherein the second BSS includes a second packet router, operatively coupled to the second packet handover controller, adopted to receive packets from the packet switching data network element, and is adopted to provide handover control packets for a mobile unit.

18. The system of claim 10 wherein the first shared resource controller is adopted to update radio resource requirement data based on resource availability update data.

19. A wireless network handover control method comprising steps of:
receiving, by a base station system (14), packet switched data from a packet switching data network element (11);
**characterized in that** the method also comprises the steps of:
providing, by the base station system, base station system controlled handover of a mobile unit (28) that receives the packet switched data by providing packet routing for a plurality of mobile units;
tracking, by a shared radio resource controller, available shared resources;
storing, for access by the base station system, radio resource requirement data, wherein the stored radio resource requirement data includes PDP context information;
determining, by the base station system, a suitable target cell for the mobile unit based on the stored radio resource requirement data and the included PDP context information.

20. The method of claim 19 wherein the radio resource requirement data is stored on a per mobile unit basis.

21. The method of claim 19 including the step of renegotiating allowable mobile resources with a target cell network element for a mobile unit designated for a handover after target cell selection, based on the stored radio resource requirement data.

22. The method claim 19 including the step of reassigning radio resources to at least one mobile unit based on the stored radio resource requirement data associated with another mobile.

23. The method of claim 19 including the step of reassigning radio resources to at least one mobile unit based on cell congestion data.

24. The method of claim 19 including the steps of:
generating and receiving messages including at least one of: a handover resource query message to another network handover control apparatus, a handover resource response message, a handover request, a packet data protocol context suspend message, and a re-activate packet data protocol context message.

25. The method of claim 19 including communicating, by the base station system, data in both a packet switching format and a circuit switching format for communicating data with mobile units.

26. The method of claim 19 including providing, by the base station system, handover control packets for a mobile unit, based on the stored shared radio resource requirement data.

27. The method of claim 19 wherein the step of renegotiating allowable mobile resources with a target cell network element for a mobile unit designated for a handover after target cell selection includes suspending at least a portion of a PDP context associated with a mobile.

28. The method of claim 19 wherein the step of renegotiating allowable mobile resources with a target cell network element for a mobile unit designated for a handover after target cell selection includes de-activating at least a portion of a PDP context associated with a mobile.

29. The method of claim 19 wherein the step of renegotiating allowable mobile resources with a target cell network element for a mobile unit designated for a handover after target cell selection includes re-activating at least a portion of a suspended PDP context associated with a mobile.

## Patentansprüche

1. Handover-Steuervorrichtung für ein drahtloses Netzwerk, die umfasst:
eine gemeinsam verwendete Funkressourcensteuerung (302), die arbeitet, um zur Verfügung stehende gemeinsam verwendete Ressourcen zu verfolgen;
**dadurch gekennzeichnet, dass** die Vorrichtung weiterhin umfasst:
ein Basisstationssystem (BSS), das eine Paket-Handover-Steuerung (304) umfasst, die sich in einer betriebsbereiten Kommunikation mit der gemeinsam verwendeten Funkressourcensteuerung befindet, die verwendet wird, um ein Paket-Routing von empfangenen Datenpaketen für eine Mehrzahl von mobilen Einheiten zur Verfügung zu stellen;
einen betriebsbereit an die Paket-Handover-Steuerung gekoppelten Speicher (308), der gespeicherte Funkressourcenanforderungsdaten enthält, die PDP-Kontextinformationen umfassen, und
wobei die Paket-Handover-Steuerung arbeitet, um eine geeignete Zielzelle für die mindestens eine mobile Einheit basierend auf den gespeicherten Funkressourcenanforderungsdaten und den enthaltenen PDP-Kontextinformationen zu bestimmen.

2. Netzwerk-Handover-Steuervorrichtung gemäß Anspruch 1, wobei der Speicher die gespeicherten Funkressourcenanforderungsdaten auf einer Pro-Mobileinheit-Basis enthält.

3. Netzwerk-Handover-Steuervorrichtung gemäß Anspruch 1, wobei die Paket-Handover-Steuerung arbeitet, um zulässige Mobileinheitsressourcen mit einem Zielzellennetzwerkelement für eine mobile Einheit, die für ein Handover nach einer Zielzellenauswahl vorgesehen ist, basierend auf den gespeicherten Funkressourcenanforderungsdaten neu zu verhandeln.

4. Netzwerk-Handover-Steuervorrichtung gemäß Anspruch 1, wobei die Paket-Handover-Steuerung arbeitet, um Funkressourcen mindestens einer mobilen Einheit basierend auf den gespeicherten Funkressourcenanforderungsdaten, die mit einer anderen mobilen Einheit verknüpft sind, neu zuzuweisen.

5. Netzwerk-Handover-Steuervorrichtung gemäß Anspruch 1, wobei die Paket-Handover-Steuerung arbeitet, um Funkressourcen mindestens einer mobilen Einheit basierend auf Zellenüberlastungsdaten neu zuzuweisen.

6. Netzwerk-Handover-Steuervorrichtung gemäß Anspruch 1, wobei die Paket-Handover-Steuerung Daten erzeugt und empfängt, die mindestens darstellen: eine Handover-Ressourcenabfragenachricht an eine andere Netzwerk-Handover-Steuervorrichtung, eine Handover-Ressourcenantwortnachricht, eine Handover-Anfrage, eine Paketdatenprotokollkontextaußerkraftsetzungsnachricht, oder eine Paketdatenprotokollcontextreaktivierungsnachricht.

7. Netzwerk-Handover-Steuervorrichtung gemäß Anspruch 1, wobei die gemeinsam verwendete Ressourcensteuerung und die Paket-Handover-Steuerung Teil eines digitalen RF-Kommunikationsnetzwerkelementes sind, das arbeitet, um sowohl Paketvermittlungs- als auch Schaltungsvermittlungsformate zum Kommunizieren von Daten mit der Mehrzahl von mobilen Einheiten zu verwenden.

8. Netzwerk-Handover-Steuervorrichtung gemäß Anspruch 1, die einen Paket-Router umfasst, der betriebsbereit an die Paket-Handover-Steuerung gekoppelt ist, die arbeitet, um Pakete von einem Paketvermittlungsnetzwerkelement zu empfangen, und Handover-Steuerpakete für eine mobile Einheit zur Verfügung stellt.

9. Netzwerk-Handover-Steuervorrichtung gemäß Anspruch 1, wobei die gemeinsam verwendete Funkressourcensteuerung arbeitet, um Funkressourcenanforderungsdaten basierend auf Ressourcenverfügbarkeitsaktualisierungsdaten zu aktualisieren.

10. Digitales drahtloses System, das über ein Paketvermittlungsdatennetzwerkelement verfügt, das sich in betriebsbereiter Kommunikation mit mindestens einem ersten (14) und zweiten (16) Basisstationssystem (BSS) befindet, **gekennzeichnet durch**:
einen ersten Speicher, auf den **durch** das erste Basisstationssystem (14) betriebsbereit zugegriffen werden kann, der dynamisch aktualisierte Funkressourcenanforderungsdaten für eine Mehrzahl von mobilen Einheiten enthält, die **durch** das erste BSS versorgt werden, und wobei
das erste BSS eine erste gemeinsam verwendete Funkressourcensteuerung umfasst, die arbeitet, um verfügbare gemeinsam verwendete Ressourcen zu verfolgen, und eine erste Paket-Handover-Steuerung umfasst, die sich in einer betriebsbereiten Kommunikation mit der gemeinsam verwendeten Funkressourcensteuerung befindet, die arbeitet, um ein Paket-Routing von empfangenen Datenpaketen für eine Mehrzahl von mobilen Einheiten zur Verfügung zu stellen;
einen zweiten Speicher, auf den **durch** das zweite Basisstationssystem (16) betriebsbereit zugegriffen werden kann, der dynamisch aktualisierte Funkressourcenanforderungsdaten für eine Mehrzahl von mobilen Einheiten enthält, die **durch** das zweite BSS versorgt werden, und wobei
das zweite Basisstationssystem eine zweite gemeinsam verwendete Funkressourcensteuerung und eine zweite Paket-Handover-Steuerung umfasst, die sich in einer betriebsbereiten Kommunikation mit der zweiten gemeinsam verwendeten Funkressourcensteuerung befindet, die arbeitet, um ein Paket-Routing von empfangenen Datenpaketen für eine Mehrzahl von mobilen Einheiten zur Verfügung zu stellen,
wobei die dynamisch aktualisierten Funkressourcenanforderungsdaten PDP-Kontextinformationen umfassen und wobei die erste und zweite Paket-Handover-Steuerung arbeiten, um eine geeignete Zielzelle für eine mobile Einheit basierend auf den dynamisch aktualisierten Funkressourcenanforderungsdaten und den enthaltenen PDP-Informationen in dem ersten oder zweiten Speicher zu bestimmen.

11. System gemäß Anspruch 10, wobei die erste und zweite Paket-Handover-Steuerung arbeiten, um zulässige Mobileinheitsressourcen für eine mobile Einheit, die für ein Handover nach einer Zielzellenauswahl vorgesehen ist, basierend auf dynamisch aktualisierte Funkressourcenanforderungsdaten in dem ersten oder zweiten Speicher mit einem Zielzellennetzwerkelement neu zu verhandeln.

12. System gemäß Anspruch 10, wobei das erste BSS arbeitet, um Daten zu erzeugen, die eine Handover-verzahnte Ressourcen-Abfrage für das zweite BSS darstellen, basierend auf den dynamisch aktualisierten Funkressourcenanforderungsdaten, die in dem ersten Speicher gespeichert sind, und wobei das zweite BSS arbeitet, um Daten zu erzeugen, die eine Handover-Ressourcenantwort für das erste BSS darstellen, basierend auf gemeinsam verwendete Ressourcenverfügbarkeitsdaten des zweiten BSS, und wobei das erste BSS arbeitet, um Daten zu erzeugen, die eine Paketdatenprotokollkontextaußerkraftsetzungsnachricht, entsprechend einer mobilen Einheit, die an das zweite BSS weiterzugeben ist, für das Paketdatenvermittlungsnetzwerkelement darstellen, und wobei das zweite BSS arbeitet, um Daten zu erzeugen, die eine Paketdatenprotokollkontextreaktivierung für das Paketdatenvermittlungsnetzwerkelement in Reaktion auf ein erfolgreiches Handover von dem ersten BSS darstellen.

13. System gemäß Anspruch 10, wobei die erste Paket-Handover-Steuerung arbeitet, um Funkressourcen mindestens einer mobilen Einheit basierend auf den gespeicherten Funkressourcenanforderungsdaten, die mit einer anderen mobilen Einheit verknüpft sind, neu zuzuweisen.

14. System gemäß Anspruch 10, wobei die erste Paket-Handover-Steuerung arbeitet, um Funkressourcen mindestens einer mobilen Einheit basierend auf Zellenüberlastungsdaten neu zuzuweisen.

15. System gemäß Anspruch 10, wobei die erste und zweite Basisstation Teil eines digitalen RF-Kommunikationssystems sind, das sowohl Paketvermittlungsformate als auch Schaltungsvermittlungsformate zum Kommunizieren von Daten mit der Mehrzahl von mobilen Einheiten verwendet.

16. System gemäß Anspruch 10, wobei das erste BSS einen ersten Paket-Router umfasst, der betriebsbereit an die erste Paket-Handover-Steuerung gekoppelt ist, die arbeitet, um Pakete von dem Paketvermittlungsdatennetzwerkelement zu empfangen, und arbeitet, um Handover-Steuerpakete für eine mobile Einheit zur Verfügung zu stellen.

17. System gemäß Anspruch 16, wobei das zweite BSS einen zweiten Paket-Router umfasst, der betriebsbereit an die zweite Paket-Handover-Steuerung gekoppelt ist, die arbeitet, um Pakete von dem Paketvermittlungsdatennetzwerkelement zu empfangen, und arbeitet, um Handover-Steuerpakete für eine mobile Einheit zur Verfügung zu stellen.

18. System gemäß Anspruch 10, wobei die erste gemeinsam verwendete Ressourcensteuerung arbeitet, um Funkressourcenanforderungsdaten basierend auf Ressourcenverfügbarkeitsaktualisierungsdaten zu aktualisieren.

19. Drahtloses Netzwerk-Handover-Steuerverfahren, das die folgenden Schritte umfasst:
Empfangen, durch ein Basisstationssystem (14), von paketvermittelten Daten von einem Paketvermittlungsdatennetzwerkelement (11);
**dadurch gekennzeichnet, dass** das Verfahren außerdem die folgenden Schritte umfasst:
Bereitstellen, durch das Basisstationssystem, von basisstationssystemgesteuertem Handover einer mobilen Einheit (28), die die paketvermittelten Daten durch Bereitstellen von Paket-Routing für eine Mehrzahl von mobilen Einheiten empfängt;
Verfolgen, durch eine gemeinsam verwendete Funkressourcensteuerung, von verfügbaren gemeinsam verwendeten Ressourcen;
Speichern, für einen Zugriff durch das Basisstationssystem, von Funkressourcenanforderungsdaten, wobei die gespeicherten Funkressourcenanforderungsdaten PDP-Kontextinformationen umfassen;
Bestimmen, durch das Basisstationssystem, einer geeigneten Zielzelle für die mobile Einheit basierend auf den gespeicherten Funkressourcenanforderungsdaten und den enthaltenden PDP-Kontextinformationen.

20. Verfahren gemäß Anspruch 19, wobei die Funkressourcenanforderungsdaten auf einer pro-Mobileinheit-Basis gespeichert werden.

21. Verfahren gemäß Anspruch 19, den Schritt einer Neuverhandlung von zulässigen mobilen Ressourcen mit einem Zielzellennetzwerkelement für eine mobile Einheit umfassend, die für ein Handover nach einer Zielzellenauswahl vorgesehen ist, basierend auf den gespeicherten Funkressourcenanforderungsdaten.

22. Verfahren gemäß Anspruch 19, den Schritt einer Neuzuweisung von Funkressourcen zu mindestens einer mobilen Einheit umfassend, basierend auf den mit einer anderen mobilen Einheit verknüpften gespeicherten Funkressourcenanforderungsdaten.

23. Verfahren gemäß Anspruch 19, den Schritt einer Neuzuweisung von Funkressourcen zu mindestens einer mobilen Einheit basierend auf Zellenüberlastungsdaten.

24. Verfahren gemäß Anspruch 19, das die folgenden Schritte umfasst:
Erzeugen und Empfangen von Nachrichten, die mindestens umfassen: eine Handover-Ressourcenabfragenachricht an eine andere Netzwerk-Handover-Steuervorrichtung, eine Ressourcenantwortnachricht, eine Handover-Anforderung, eine Paketdatenprotokollkontextaußerkraftsetzungsnachricht, oder eine Paketdatenprotokollkontextreaktivierungsnachricht.

25. Verfahren gemäß Anspruch 19, das ein Kommunizieren, durch das Basisstationssystem, von Daten sowohl in einem Paketvermittlungsformat als auch einem Schaltungsvermittlungsformat zum Kommunizieren von Daten mit mobilen Einheiten umfasst.

26. Verfahren gemäß Anspruch 19, das ein Bereitstellen, durch das Basisstationssystem, von Handover-Steuerpaketen für eine mobile Einheit umfasst, basierend auf den gespeicherten gemeinsam verwendeten Funkressourcenanforderungsdaten.

27. Verfahren gemäß Anspruch 19, wobei der Schritt einer Neuverhandlung von zulässigen mobilen Ressourcen mit einem Zielzellennetzwerkelement für eine mobile Einheit, die für ein Handover nach einer Zielzellenauswahl vorgesehen ist, ein Außerkraftsetzen mindestens eines Teils eines mit einer mobilen Einheit verknüpften PDP-Kontextes umfasst.

28. Verfahren gemäß Anspruch 19, wobei der Schritt einer Neuverhandlung von zulässigen mobilen Ressourcen mit einem Zielzellennetzwerkelement für eine mobile Einheit, die für ein Handover nach einer Zielzellenauswahl vorgesehen ist, ein Deaktivieren mindestens eines Teils eines mit einer mobilen Einheit verknüpften PDP-Kontextes umfasst.

29. Verfahren gemäß Anspruch 19, wobei der Schritt einer Neuverhandlung von zulässigen mobilen Ressourcen mit einem Zielzellennetzwerkelement für eine mobile Einheit, die für ein Handover nach einer Zielzellenauswahl vorgesehen ist, ein Reaktivieren mindestens eines Teils eines mit einer mobilen Einheit verknüpften außer Kraft gesetzten PDP-Kontextes umfasst.

## Revendications

1. Appareil de commande de transfert intercellulaire de réseau sans fil comprenant :
un contrôleur de ressources radio partagées (302) servant à rechercher les ressources partagées disponibles ;
**caractérisé en ce que** l'appareil comprend en outre
un système de station de base (BSS) qui comprend un contrôleur de transfert intercellulaire de paquets (304) en communication fonctionnelle avec le contrôleur de ressources radio partagées, adapté pour fournir un routage de paquets des paquets de données reçus pour une pluralité d'unités mobiles ;
une mémoire (308), couplée fonctionnellement au contrôleur de transfert intercellulaire de paquets, contenant des données de besoins de ressources radio stockées qui comprennent des informations de contexte PDP, et
dans lequel le contrôleur de transfert intercellulaire de paquets est adapté pour déterminer une cellule cible appropriée pour l'au moins une unité mobile sur la base des données de besoins de ressources radio stockées et des informations de contexte PDP incluses.

2. Appareil de commande de transfert intercellulaire de réseau selon la revendication 1, dans lequel la mémoire contient les données de besoins de ressources radio stockées sur une base d'unité mobile par unité mobile.

3. Appareil de commande de transfert intercellulaire de réseau selon la revendication 1, dans lequel le contrôleur de transfert intercellulaire de paquets est adapté pour renégocier les ressources d'unités mobiles admissibles avec un élément de réseau de cellule cible pour une unité mobile désignée pour un transfert intercellulaire après une sélection de cellule cible, sur la base des données de besoins de ressources radio stockées.

4. Appareil de commande de transfert intercellulaire de réseau selon la revendication 1, dans lequel le contrôleur de transfert intercellulaire de paquets est adapté pour réattribuer les ressources radio à au moins une unité mobile sur la base des données de besoins de ressources radio stockées associées à une autre unité mobile.

5. Appareil de commande de transfert intercellulaire de réseau selon la revendication 1, dans lequel le contrôleur de transfert intercellulaire de paquets sert à réattribuer les ressources radio à au moins une unité mobile sur la base de données d'encombrement de cellules.

6. Appareil de commande de transfert intercellulaire de réseau selon la revendication 1, dans lequel le contrôleur de transfert intercellulaire de paquets génère et reçoit des données représentant au moins un parmi : un message de requête de ressources de transfert intercellulaire à un autre appareil de commande de transfert intercellulaire de réseau, un message de réponse de ressources de transfert intercellulaire, une requête de transfert intercellulaire, un message de suspension de contexte de protocole de données par paquets, et un message de réactivation de contexte de protocole de données par paquets.

7. Appareil de commande de transfert intercellulaire de réseau selon la revendication 1, dans lequel le contrôleur de ressources radio partagées et le contrôleur de transfert intercellulaire de paquets font partie d'un élément de réseau de communication RF numérique adapté pour utiliser à la fois des formats de commutation de paquets et des formats de commutation de circuits pour communiquer des données avec la pluralité d'unités mobiles.

8. Appareil de commande de transfert intercellulaire de réseau selon la revendication 1 comprenant un routeur de paquets, couplé fonctionnellement au contrôleur de transfert intercellulaire de paquets, adapté pour recevoir des paquets depuis un élément de réseau de commutation de paquets et qui fournit des paquets de commande de transfert intercellulaire pour une unité mobile.

9. Appareil de commande de transfert intercellulaire de réseau selon la revendication 1, dans lequel le contrôleur de ressources radio partagées est adapté pour mettre à jour les données de besoins de ressources radio sur la base de données de mise à jour de disponibilité des ressources.

10. Système sans fil numérique ayant un élément de réseau de données de commutation de paquets en communication fonctionnelle avec au moins un premier (14) et un deuxième (16) système de station de base (BSS) **caractérisé par** :
une première mémoire, accessible fonctionnellement par le premier système de station de base (14), contenant des données de besoins de ressources radio mises à jour dynamiquement pour une pluralité d'unités mobiles desservies par le premier BSS et dans lequel,
le premier BSS comprend un premier contrôleur de ressources radio partagées, servant à rechercher les ressources partagées disponibles, et un premier contrôleur de transfert intercellulaire de paquets, en communication fonctionnelle avec le contrôleur de ressources radio partagées, adapté pour fournir un routage de paquets des paquets de données reçus pour une pluralité d'unités mobiles;
une deuxième mémoire, accessible fonctionnellement par le deuxième système de station de base (16), contenant des données de besoins de ressources radio mises à jour dynamiquement pour une pluralité d'unités mobiles desservies par le deuxième BSS et dans lequel,
le deuxième système de station de base comprend un deuxième contrôleur de ressources radio partagées, et un deuxième contrôleur de transfert intercellulaire de paquets, en communication fonctionnelle avec le deuxième contrôleur de ressources radio partagées, adapté pour fournir un routage de paquets des paquets de données reçus pour une pluralité d'unités mobiles,
dans lequel les données de besoins de ressources radio mises à jour dynamiquement comprennent des informations de contexte PDP et dans lequel les premier et deuxième contrôleurs de transfert intercellulaire de paquets sont adaptés pour déterminer une cellule cible appropriée pour une unité mobile sur la base des données de besoins de ressources radio mises à jour dynamiquement et des informations de contexte PDP incluses dans l'une des première et deuxième mémoires.

11. Système selon la revendication 10, dans lequel les premier et deuxième contrôleurs de transfert intercellulaire de paquets sont adaptés pour renégocier les ressources d'unités mobiles admissibles avec un élément de réseau de cellule cible pour une unité mobile désignée pour un transfert intercellulaire après une sélection de cellule cible, sur la base de données de besoins de ressources radio mises à jour dynamiquement dans l'une des première et deuxième mémoires.

12. Système selon la revendication 10, dans lequel le premier BSS est adapté pour générer des données représentant une requête de ressources partagées de transfert intercellulaire pour le deuxième BSS sur la base des données de besoins de ressources radio mises à jour dynamiquement stockées dans la première mémoire et dans lequel le deuxième BSS est adapté pour générer des données représentant une réponse de ressources de transfert intercellulaire pour le premier BSS, sur la base des données de disponibilité de ressources partagées du deuxième BSS et dans lequel le premier BSS est adapté pour générer des données représentant un message de suspension de contexte de protocole de données de paquets correspondant à une unité mobile devant être transférée sur le deuxième BSS, pour l'élément de réseau de commutation de données de paquets, et dans lequel le deuxième BSS est adapté pour générer des données représentant une réactivation de contexte de protocole de données de paquets pour l'élément de réseau de commutation de données de paquets en réponse à un transfert intercellulaire réussi à partir du premier BSS.

13. Système selon la revendication 10, dans lequel le premier contrôleur de transfert intercellulaire de paquets est adapté pour réattribuer des ressources radio à au moins une unité mobile sur la base des données de besoins de ressources radio stockées associées à un autre mobile.

14. Système selon la revendication 10, dans lequel le premier contrôleur de transfert intercellulaire de paquets sert à réattribuer des ressources radio à au moins un mobile sur la base de données d'encombrement cellulaire.

15. Système selon la revendication 10, dans lequel les premier et deuxième systèmes de station de base font partie d'un système de communication RF numérique qui utilise à la fois des formats de commutation de paquets et des formats de commutation de circuits pour communiquer des données avec la pluralité d'unités mobiles.

16. Système selon la revendication 10, dans lequel le premier BSS comprend un premier routeur de paquets, couplé fonctionnellement au premier contrôleur de transfert intercellulaire de paquets, adapté pour recevoir des paquets de l'élément de réseau de données de commutation de paquets, et est adapté pour fournir des paquets de commande de transfert intercellulaire pour une unité mobile.

17. Système selon la revendication 16, dans lequel le deuxième BSS comprend un deuxième routeur de paquets, couplé fonctionnellement au deuxième contrôleur de transfert intercellulaire de paquets, adapté pour recevoir des paquets de l'élément de réseau de données de commutation de paquets, et est adapté pour fournir des paquets de commande de transfert intercellulaire pour une unité mobile.

18. Système selon la revendication 10, dans lequel le premier contrôleur de ressources partagées est adapté pour mettre à jour des données de besoins de ressources radio sur la base de données de mises à jour de disponibilité de ressources.

19. Procédé de commande de transfert intercellulaire de réseau sans fil comprenant les étapes consistant à :
recevoir, par un système de station de base (14), des données de commutation de paquets depuis un élément de réseau de données de commutation de paquets (11) ;
**caractérisé en ce que** le procédé comprend aussi les étapes consistant à :
fournir, par le système de station de base, un transfert intercellulaire commandé par le système de station de base d'une unité mobile (28) qui reçoit les données de commutation de paquets en fournissant un routage de paquets pour une pluralité d'unités mobiles ;
rechercher, par un contrôleur de ressources radio partagées, les ressources partagées disponibles ;
stocker, pour l'accès par le système de station de base, des données de besoins de ressources radio, dans lequel les données de besoins de ressources radio stockées comprennent des informations de contexte PDP ;
déterminer, par le système de station de base, une cellule cible appropriée pour l'unité mobile sur la base des données de besoins de ressources radio stockées et des informations de contexte PDP incluses.

20. Procédé selon la revendication 19, dans lequel les données de besoins de ressources radio sont stockées sur une base d'unité mobile par unité mobile.

21. Procédé selon la revendication 19, comprenant l'étape de renégociation des ressources mobiles admissibles avec un élément de réseau de cellule cible pour une unité mobile désignée pour un transfert intercellulaire après la sélection de cellule cible, sur la base des données de besoins de ressources radio stockées.

22. Procédé selon la revendication 19, comprenant l'étape de réattribution des ressources radio à au moins une unité mobile sur la base des données de besoins de ressources radio stockées associées à un autre mobile.

23. Procédé selon la revendication 19, comprenant l'étape de réattribution des ressources radio à au moins une unité mobile sur la base de données d'encombrement de cellules.

24. Procédé selon la revendication 19, comprenant les étapes consistant à :
générer et recevoir des messages comprenant au moins un parmi : un message de requête de ressources de transfert intercellulaire à un autre appareil de commande de transfert intercellulaire de réseau, un message de réponse de ressources de transfert intercellulaire, une requête de transfert intercellulaire, d'un message de suspension de contexte de protocole de données de paquets, et un message de réactivation de contexte de protocole de données de paquets.

25. Procédé selon la revendication 19, comprenant la communication, par le système de station de base, de données, à la fois dans un format de commutation de paquets et un format de commutation de circuits pour communiquer des données avec des unités mobiles.

26. Procédé selon la revendication 19, comprenant la fourniture, par le système de station de base, de paquets de commande de transfert intercellulaire pour une unité mobile, sur la base des données de besoins de ressources radio partagées stockées.

27. Procédé selon la revendication 19, dans lequel l'étape de renégociation des ressources mobiles admissibles avec un élément de réseau de cellule cible pour une unité mobile désignée pour un transfert intercellulaire après la sélection de cellule cible comprend la suspension d'au moins une partie d'un contexte PDP associé à un mobile.

28. Procédé selon la revendication 19, dans lequel l'étape de renégociation des ressources mobiles admissibles avec un élément de réseau de cellule cible pour une unité mobile désignée pour un transfert intercellulaire après la sélection de cellule cible comprend la désactivation d'au moins une partie d'un contexte PDP associé à un mobile.

29. Procédé selon la revendication 19, dans lequel l'étape de renégociation des ressources mobiles admissibles avec un élément de réseau de cellule cible pour une unité mobile désignée pour un transfert intercellulaire après la sélection de cellule cible comprend la réactivation d'au moins une partie d'un contexte PDP associé à un mobile.
